# EUROPEAN PATENT SPECIFICATION

(11) **EP 2 131 140 B1**
(45) Date of publication and mention of the grant of the patent: **26.04.2017**
(21) Application number: 09161654.0
(22) Date of filing: 02.06.2009
(51) Int. Cl.: G01B 3/18

(54) **Micrometer**
Mikrometer
Micromètre

(30) Priority: 04.06.2008 JP 2008146983
(43) Date of publication of application: 09.12.2009
(73) Proprietor: Mitutoyo Corporation, Kawasaki-shi, Kanagawa 213-8533 (JP)
(72) Inventor: Hayashida, Shuji, Kanagawa 213-8533 (JP); Tsuji, Shozaburo, Kanagawa 213-8533 (JP); Suzuki, Masamichi, Kanagawa 213-8533 (JP)
(74) Representative: Gill Jennings & Every LLP

(56) References cited:
- US-A- 797 745
- US-A- 5 495 677
- US-A- 5 920 198
- US-B1- 6 260 286

## Description

### BACKGROUND OF THE INVENTION

### 1. FIELD OF THE INVENTION

The present invention relates to a micrometer.

### 2. DESCRIPTION OF RELATED ART

A micrometer is typically known for measuring a dimension of an object to be measured. The micrometer includes: a main body substantially of a U-shape that is provided with an anvil at a first end and a female screw at an inside of a second end; a spindle that is screwed to the female screw in the main body and moves toward and away from in an axial direction relative to the anvil in accordance with a screwing rotation; and an operation section that rotates the spindle to move the spindle toward and away from the anvil. In measuring an object, the operation section is rotated to move the spindle in the axial direction and abut the spindle against the object placed between the spindle and the anvil. The dimension of the object is measured by the displacement of the spindle when being abutted against the anvil. Such a micrometer is typically provided with a constant pressure mechanism for applying a constant pressure load (measuring pressure) of the spindle against the object so as to improve the measuring accuracy.

Fig. 7 is an illustration of a micrometer 1 including a constant pressure mechanism disclosed in JP-A-11-287602.

The micrometer 1 includes: a main body 10 substantially of a U-shape that is provided with an anvil 11 at a first end and a projection 50 at a second end, the projection 50 projecting outward and having a female screw 51 on an inner circumference thereof; a spindle 20 that is screwed to the female screw 51 inside the projection 50, the spindle 20 moving toward and away from the anvil 11 in the axial direction in accordance with screwing rotation; a thimble 30 that is rotatably fitted to the projection 50; and a constant pressure mechanism 40 provided in the thimble 30, the constant pressure mechanism 40 transmitting the rotation of the thimble 30 to the spindle 20 and freely rotating the thimble 30 against the spindle 20 when the spindle 20 receives more than a predetermined load, thereby applying the constant measuring pressure. A guide groove 34 is provided along the axial direction of the spindle 20 on an inner circumference of the thimble 30.

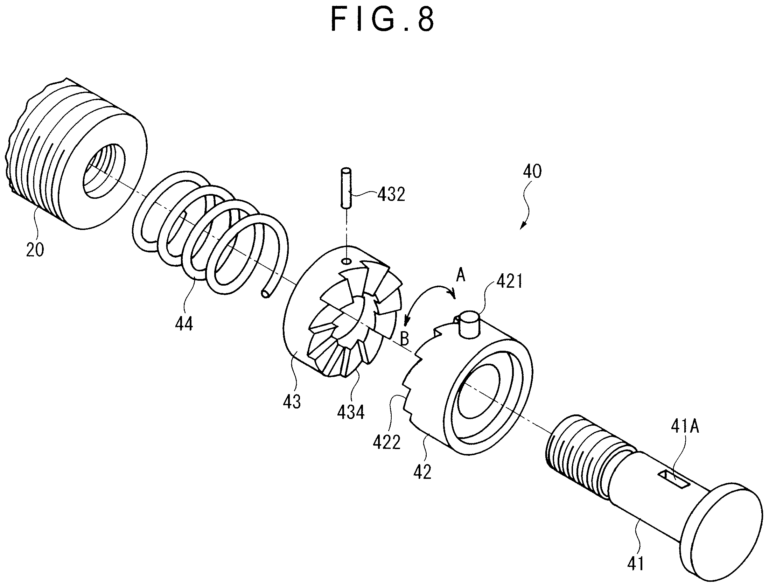

Fig. 8 is an enlarged perspective view of the constant pressure mechanism 40.

The constant pressure mechanism 40 includes: a support shaft 41 that is provided with a groove 41 A along an axial direction on an outer circumference thereof and is screwed to a base end of the spindle 20; a first rotation-transmitting ring 42 that has an engaging pin 421 to be engaged with the guide groove 34 and is rotatably fitted in the support shaft 41; a second rotation-transmitting ring 43 that has a pin 432 to be inserted into the groove 41A and is fitted to the support shaft 41 in a manner not rotatable but movable forward and backward in the axial direction; and a coil spring 44 that biases the second rotation transmitting ring 43 toward the first rotation transmitting ring 42. Sawtooth projections 422 and 434 to be engaged with each other are provided on opposing surfaces of the first and second rotation transmitting rings 42 and 43.

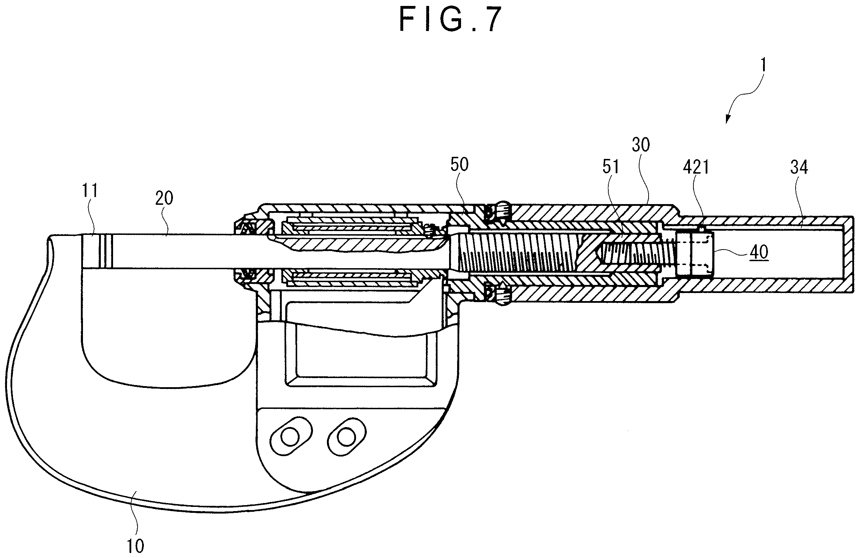

In this micrometer 1, when the thimble 30 is rotated in a direction of A in Fig. 7 to measure an object, the rotation is transmitted to the spindle 20 through the engaging pin 421, the first and second rotation transmitting rings 42 and 43 and the support shaft 41 to move the spindle 20 toward the object.

When the spindle 20 is abutted against the object and receives more than a predetermined load, the sawtooth projection 422 provided on the first rotation transmitting ring 42 slips on the sawtooth projection 434 provided on the second rotation transmitting ring 43, whereby the thimble 30 is freely rotated against the spindle 20. Accordingly, the measurement can be conducted under a constant measuring pressure.

However, in such a typical micrometer 1, the axial length of the constant pressure mechanism 40 increases on account of a length of the coil spring 44 and a thickness of the first and second rotation transmitting rings 42 and 43, thereby increasing the length of the thimble 30 and, consequently, the size of the micrometer 1.

US-A-797,754, US-A-5,495,677, US-A-5,920,198 and US-A-6,260,286 each disclose micrometers having constant-pressure assemblies in which a curved plate spring member is designed to rotate about the spindle axis inside a serrated ring member. The spring disengages from the serrations when the force required to turn the spindle reaches a threshold upon the spindle contacting the workpiece.

### SUMMARY OF THE INVENTION

The objectives according to the invention are achieved by an apparatus comprising the features of claim 1.

An object of the invention is to provide a micrometer capable of reducing a size thereof.

A micrometer according to an aspect of the invention includes: a main body of a substantially U-shape that has an anvil at a first end thereof and a female screw at a second end thereof; a spindle that is screwed in the female screw and is axially moved toward and away from the anvil in accordance with a screwing rotation; an operation section that rotates the spindle to move the spindle toward and away from the anvil; and a constant pressure mechanism interposed between the operation section and the spindle, the constant pressure mechanism transmitting a rotation of the operation section to the spindle and freely rotating the operation section relative to the spindle when more than a predetermined load is applied on the spindle, in which the operation section includes a ratchet ring of a ring shape that is provided with a sawtooth first projection on an inner circumference thereof; the constant pressure mechanism includes: a support shaft provided with a shaft portion that is provided at a base end of the spindle coaxially with a center axis of the spindle and inserted into the ratchet ring and a head provided at a base end of the shaft portion and having a diameter larger than the shaft portion; a ratchet claw that is provided in the ratchet ring in a manner to be rotatable around a shaft held by the head and is provided with a second projection to be engaged with the first projection on a lateral side thereof; and a biasing unit that biases the ratchet claw toward the first projection.

According to this arrangement, the ratchet claw provided in the ratchet ring is biased by a biasing unit to engage the second projection of the ratchet claw with the first projection on the inner circumference of the ratchet ring. Accordingly, when the operation section, i.e. the ratchet ring is rotated, the rotation is transmitted to the support shaft through the ratchet claw and the shaft of the ratchet claw to be transmitted from the support shaft to the spindle. Herein, the ratchet claw, the biasing unit and the shaft of the support shaft are disposed within the ratchet ring. In other words, according to an aspect of the invention, the above-described members are disposed in a space in the ratchet ring orthogonal to the axial direction of the spindle. Accordingly, as compared with a typical arrangement where the coil spring and the second rotation transmitting ring are provided in the axial direction of the spindle, the constant pressure mechanism can be shortened in length along the axial direction of the spindle, thereby reducing the size of the micrometer.

It is preferable that a pair of the ratchet claws are provided on both side of the shaft portion.

According to this arrangement, since a pair of the ratchet claws 43 are provided on both sides of the support shaft, the rotation of the ratchet ring is reliably transmitted to the support shaft, and consequently to the spindle.

It is preferable that the shaft portion is provided with a spring hole that is orthogonal to a center axis of the shaft portion and the biasing unit is a coil spring inserted into the spring hole to bias the pair of the ratchet claws toward the first projection.

According to this arrangement, the pair of the ratchet claws are biased toward the ratchet ring by a single coil spring that is inserted through the spring hole in the support shaft. Accordingly, as compared with an arrangement where each of the ratchet claws is provided with a coil spring, the number of parts can be reduced, thereby reducing the production cost.

### BRIEF DESCRIPTION OF THE DRAWINGS

Fig. 1 is an illustration showing an overall arrangement of a micrometer according to a first exemplary embodiment of the invention.
Fig. 2 is a cross-sectional view showing a primary part of the micrometer of the above exemplary embodiment.
Fig. 3 is a perspective view of a ratchet ring 33 and a constant pressure mechanism of the above exemplary embodiment.
Fig. 4 is a cross-sectional view of the ratchet ring 33 and the constant pressure mechanism of the above exemplary embodiment.
Fig. 5 is a cross-sectional view showing a primary part of a micrometer of a second exemplary embodiment of the invention.
Fig. 6 is a perspective view showing a primary part of a micrometer of a third exemplary embodiment of the invention.
Fig. 7 is an illustration showing a typical micrometer.
Fig. 8 is an enlarged perspective view of a typical constant pressure mechanism.

### DETAILED DESCRIPTION OF PREFERRED EMBODIMENT(S)

### [First Exemplary Embodiment]

A first exemplary embodiment of the invention will be described below with reference to the drawings.

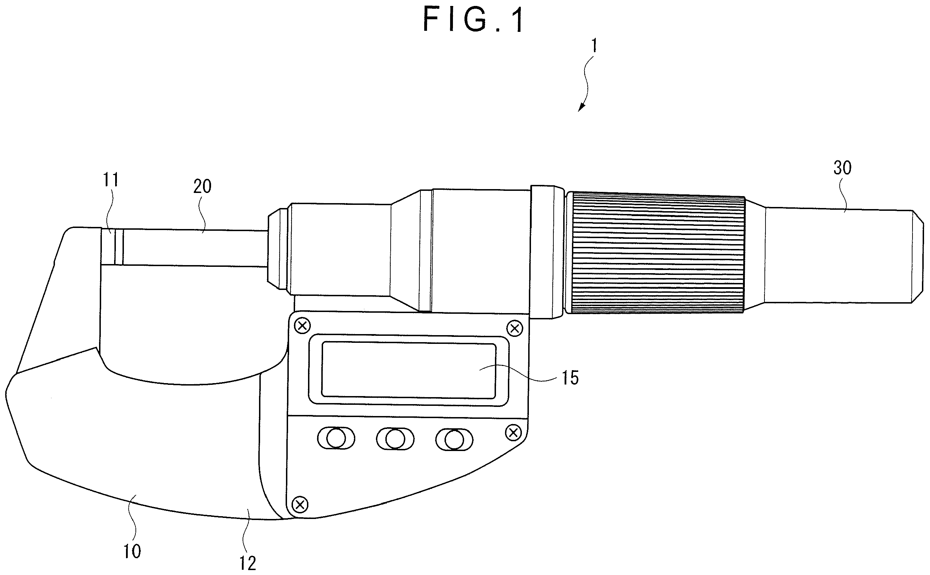

Incidentally, in the description of the exemplary embodiments, a "first" end of respective components represents an end adjacent to an anvil 11 on a left side (in Fig. 1) of the micrometer 1 and a "second" end of respective components represents an end adjacent to a thimble 30 on a right side (in Fig. 1) thereof (see Fig. 1).

Fig. 1 is an illustration showing an overall arrangement of a micrometer 1 according to this exemplary embodiment. Incidentally, the same reference numerals will be attached to components corresponding to those shown in the aforementioned Figs. 7 and 8 as follows.

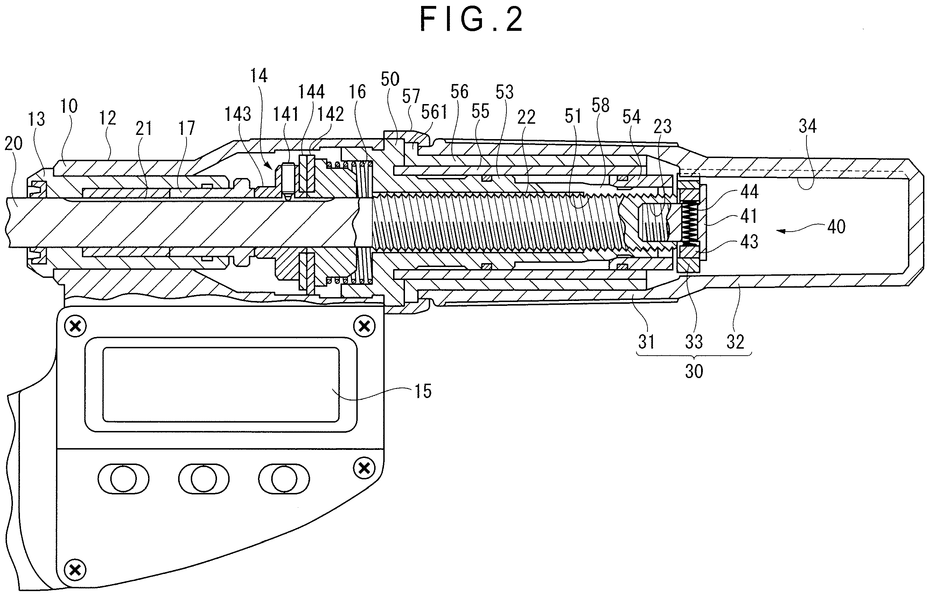

A micrometer 1 includes: a main body 10 substantially of a U-shape that is provided with an anvil 11 at a first end; a spindle 20 that is held in the main body 10 and is moved toward and away from the anvil 11; a thimble 30 as an operation section that moves the spindle 20 toward and away from the anvil 11; and a constant pressure mechanism 40 (see Fig. 2) that is provided between the thimble 30 and the spindle 20 and freely rotates the thimble 30 against the spindle 20 when the spindle 20 receives more than a predetermined load.

Fig. 2 is a cross-sectional view showing a primary part of the micrometer 1.

The main body 10 includes: a frame 12 of a U-shape; a stem 13 that is fitted to an opening end at an inner side of a second end of the frame 12 for slidably holding the spindle 20; a detector 14 that is provided inside the second end of the frame 12 for detecting a displacement of the spindle 20; a display unit 15 that is provided on a surface of the frame 12 for displaying the displacement of the spindle 20 detected by the detector 14; and a projection 50 that projects outward from the second end of the frame 12 and has a female screw 51 therein. The spindle 20 includes: an engaging groove 21 provided at a center along a center axis of the spindle 20 to be engaged with an engaging pin 141 of the detector 14 described below; a male screw 22 provided at a base end of the spindle 20 to be screwed in the female screw 51; and a screw hole 23 provided on a surface of the base end of the spindle 20 into which a support shaft 41 of the constant pressure mechanism 40 described below is screwed.

The detector 14 includes: a so-called rotary encoder provided with a stator 142, a rotor bushing 143 and a rotor 144; and a processing unit (not shown) for calculating the displacement of the spindle 20 based on an output signal of the rotary encoder.

The spindle 20 penetrates the stator 142. The circumferential rotation of the stator 142 around the spindle 20 is restricted. Additionally, the stator 142 is biased by a spring 16 toward a first end of the main body 10.

The spindle 20 penetrates the rotor bushing 143. The rotor bushing 143 is provided with the engaging pin 141 to be engaged with the engaging groove 21 of the spindle 20, thereby being rotated integrally with the spindle 20.

The rotor 144 is penetrated by the spindle 20 and engaged with the rotor bushing 143, thereby being rotated integrally with the rotor bushing 143. The rotor 144 is biased toward a second end of the main body 10 through the rotor bushing 143 by an adjusting screw 17 screwed in the stem 13, the rotor 144 being provided at a predetermined gap from the stator 142. The rotor 144 outputs a relative angle signal indicating an angle of the rotor 144 relative to the stator 142.

The processing unit (not shown) calculates a rotation of the spindle 20 from the relative angle signal outputted by the rotor 144 to calculate the displacement of the spindle 20 according to the rotation of the spindle 20 and a pitch of the male screw 22. As described above, the displacement of the spindle 20 calculated by the processing unit is displayed on the displaying unit 15.

The projection 50 includes an inner sleeve 53, an adjusting nut 54, a guide cylinder 55, an outer sleeve 56 and a retaining nut 57.

A first end of the inner sleeve 53 is connected with an opening end of an outer side of the second end of the frame 12. The retaining nut 57 is screwed on an outer circumference of the first end of the inner sleeve 53. A slit 58 is provided by slitting at a second end of the inner sleeve 53. The female screw 51 where the spindle 20 is screwed is provided on an inner circumference of the slit 58. Another female screw (not shown) where the adjusting nut 54 is screwed is provided on an outer circumference of the slit 58.

The adjusting nut 54 is screwed into the slit 58 to adjust the fitting of the inner sleeve 53 and the spindle 20.

The guide cylinder 55 is fitted in the inner sleeve 53.

A collar 561 is provided at a first end of the outer sleeve 56. The outer sleeve 56 is rotatably fitted outside the guide cylinder 55. The retaining nut 57 is fitted on the collar 561, thereby rotatably holding the outer sleeve 56 at a fixed position in the axial direction of the spindle 20. The thimble 30 is fitted on the outer sleeve 56 from the outside to be bonded. Thus, the thimble 30 is rotatably held at a fixed position in the axial direction of the spindle 20 and around the center axis of the spindle 20.

The thimble 30, which is made of a synthetic resin, includes: a cylinder 31 that is bonded to the outer sleeve 56; a cap 32 that is integrated with a second end of the cylinder 31 to cover a second end of the spindle 20; and a ratchet ring 33 that is disposed in the cap 32. The cap 32 has an axial length sufficient for the micrometer 1 to measure the object having a predetermined width, in other words, for the spindle 20 and the constant pressure mechanism 40 to be moved away from the object by a predetermined distance. A guide key 34 (engaging projection) is provided on an inner circumference of the cap 32 along the axial direction of the spindle 20. The ratchet ring 33 and the constant pressure mechanism 40 (the most unique feature in this exemplary embodiment) are provided in a space in the cap 32.

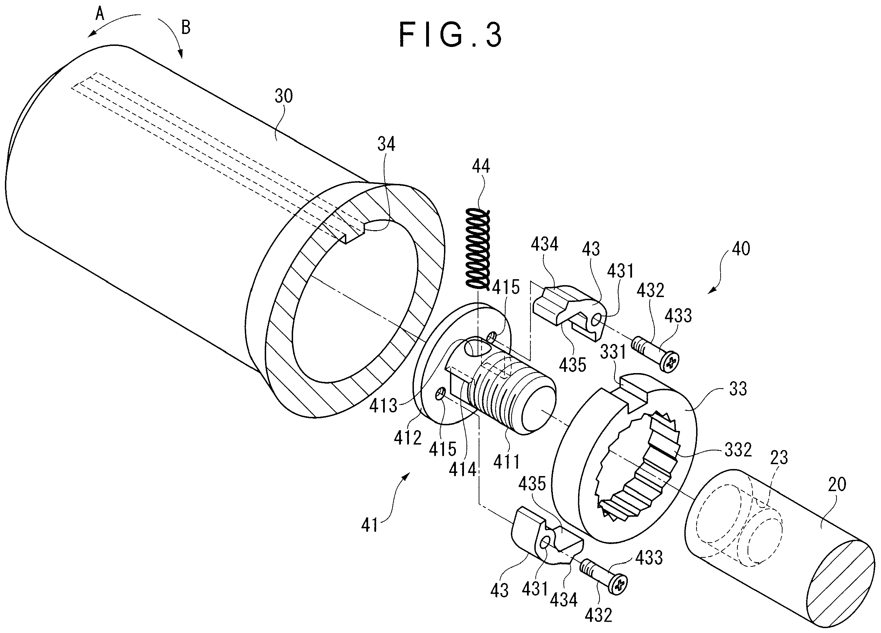

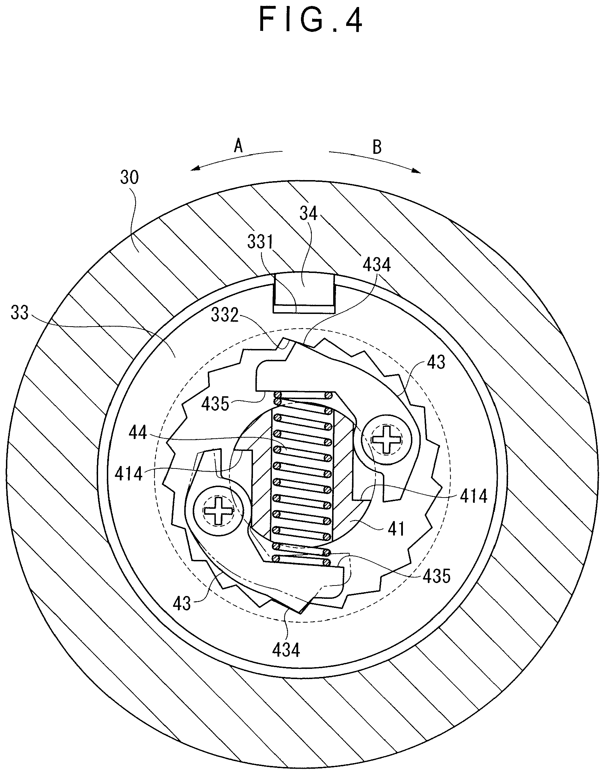

Fig. 3 is a perspective view of the ratchet ring 33 and the constant pressure mechanism 40. Fig. 4 is a cross-sectional view of the ratchet ring 33 and the constant pressure mechanism 40.

The ratchet ring 33 is a ring provided with a groove 331 on an outer circumference thereof along the axial direction of the spindle 20. The groove 331 is engaged with the guide key 34, whereby the ratchet ring 33 is integrally rotated with the thimble 30 and slides relative to the thimble 30 in accordance with the displacement of the spindle 20. Sawtooth first projections 332 are provided on an inner circumference of the ratchet ring 33.

As described above, the constant pressure mechanism 40 transmits the rotation of the thimble 30 to the spindle 20, and freely rotates the thimble 30 against the spindle 20 when the spindle 20 receives more than a predetermined load, thereby maintaining the measuring pressure. The constant pressure mechanism 40 includes the support shaft 41, a pair of ratchet claws 43 and a coil spring 44 (a biasing unit of the invention).

The support shaft 41 includes: a shaft portion 411 that is screwed in the screw hole 23 of the spindle 20 coaxially with the center axis as the spindle 20 and is inserted through the ratchet ring 33; and a head 412 that is provided at a base end of the shaft portion 411 and has a larger diameter than the shaft portion 411.

A spring hole 413, which is provided at a base end of the shaft portion 411, is orthogonal to a center axis of the shaft portion 411 and penetrates through the shaft portion 411. The coil spring 44 is disposed in the spring hole 413. A notch 414 is provided on an outer circumference of the base end of the shaft portion 411 so as to define a space to dispose the ratchet claws 43 on the head 412.

The head 412 is provided with a pair of screw holes 415. A screw 432 described below is screwed in each of the screw holes 415.

A pair of the ratchet claws 43 are provided in a manner to oppose each other around the support shaft 41, each of the ratchet claws 43 being curved. A hole 431 is provided at one end of each of the ratchet claws 43. By the screw 432 (shaft of the invention) being inserted through the hole 431 to be screwed in the screw hole 415 of the head 412, each of the ratchet claws 43 is rotatably provided around the screw 432 in the ratchet ring 33. A base portion of the screw 432 that penetrates the ratchet claw 43 is a pin portion 433, in which no male screw is provided.

A sawtooth second projection 434 to be engaged with the first projection 332 is provided on an outer circumference of the other end of the ratchet claw 43. A flat abutment surface 435 where the coil spring 44 is abutted is provided on an inner circumference of the other end of the ratchet claw 43. The abutment surface 435 is biased away from the support shaft 41 by the coil spring 44, so that the second projection 434 is always biased toward the first projection 332.

An operation of this exemplary embodiment of the invention will be described below.

In measuring an object, when the cylinder 31 is rotated in a direction of A (feeding direction), the rotation is transmitted to the ratchet ring 33 through the guide key 34 and the groove 331, whereby the ratchet ring 33 is rotated in the direction of A integrally with the cylinder 31. At this time, the second projection 434 of the ratchet claw 43 is biased toward one of the first projections 332 of the ratchet ring 33 by the coil spring 44 to be engaged with the one of the first projections 332. Accordingly, the rotation of the ratchet ring 33 is transmitted to the support shaft 41 through the ratchet claw 43 and the screw 432 inserted through the ratchet claw 43 to be transmitted from the support shaft 41 to the spindle 20. Consequently, the spindle 20 is screwed with the female screw 51 inside the projection 50 to be rotated to be moved toward the object to be measured.

Thus, in measuring an object, the thimble 30 is rotated in the direction of A to move the spindle 20 toward the object until the spindle 20 is abutted against the object, thereby holding the object by the anvil 11 and the spindle 20. When the thimble 30 is further rotated in the direction of A, the spindle 20 cannot advance. Accordingly, the ratchet claw 43 receives more than a predetermined load, so that the ratchet claw 43 just moves over one of the first projections 332 while compressing the coil spring 44 even if the ratchet ring 33 is rotated once more (see a chain double-dashed line in Fig. 4). Consequently, the thimble 30 freely rotates against the spindle 20. Accordingly, after holding an object by the anvil 11 and the spindle 20, by reading the displacement of the spindle 20 detected by the detector 14 and displayed on the display unit 15, the object can be measured under a constant measuring pressure.

When the spindle 20 is moved away from the object, the thimble 30 is rotated in a direction of B. In the same manner as described above, the rotation of the thimble 30 is transmitted to the spindle 20 through the ratchet claw 43, the screw 432 and the support shaft 41, thereby rotating and moving the spindle 20 away form the object while being meshed with the female screw 51. In this exemplary embodiment, the ratchet claws 43 are arranged so that one of the ratchet claws 43 is engaged with one of the first projections 332 of the ratchet ring 33 (see Fig. 4).

According to the above exemplary embodiment, the following advantages can be achieved.

The ratchet claw 43 that transmits the rotation of the ratchet ring 33 to the support shaft 41 and the coil spring 44 that biases the ratchet claw 43 toward the inner circumference of the ratchet ring 33 are provided in a space in the ratchet ring 33 orthogonal to the axial direction of the spindle 20. Accordingly, as compared with a typical arrangement where the coil spring 44 and the second rotation transmitting ring 43 are provided in the axial direction of the spindle 20, the length of the constant pressure mechanism 40 along the axial direction of the spindle 20 can be shortened by housing the ratchet claw 43 and the coil spring 44 within the ratchet ring 33. Consequently, the thimble 30 housing the constant pressure mechanism 40 can be shortened for the shortened length of the constant pressure mechanism 40, thereby reducing the size of the micrometer 1.

When the micrometer 1 is operated by one hand, for example, the object is held by a left hand and the frame 12 is held by a right hand and the thimble 30 is rotated with a thumb and a forefinger of the right hand to move the spindle 20 forward and backward. When a micrometer is so arranged that the thimble is axially moved in accordance with the rotation of the thimble, in order to move the spindle far away from the anvil, the thimble is moved far away from the frame, which hinders the operation of the user. In contrast, in this exemplary embodiment, the thimble 30 is rotatably provided at the fixed position in the axial direction of the spindle 20, so that the thimble 30 is not separated from the frame 12 even when the spindle 20 is moved for a long distance, thereby facilitating the measurement by one hand.

Since a pair of the ratchet claws 43 are provided on the both sides of the support shaft 41, the rotation of the ratchet ring 33 is reliably transmitted to the support shaft 41, and, consequently, to the spindle 20.

The pair of the ratchet claws 43 are biased toward the ratchet ring 33 by a single coil spring 44 that is inserted through the spring hole 413 provided on the support shaft 41. Accordingly, as compared with an arrangement where each of the ratchet claws 43 is provided with the coil spring 44, the number of parts can be reduced, thereby decreasing the production cost.

### [Second Exemplary Embodiment]

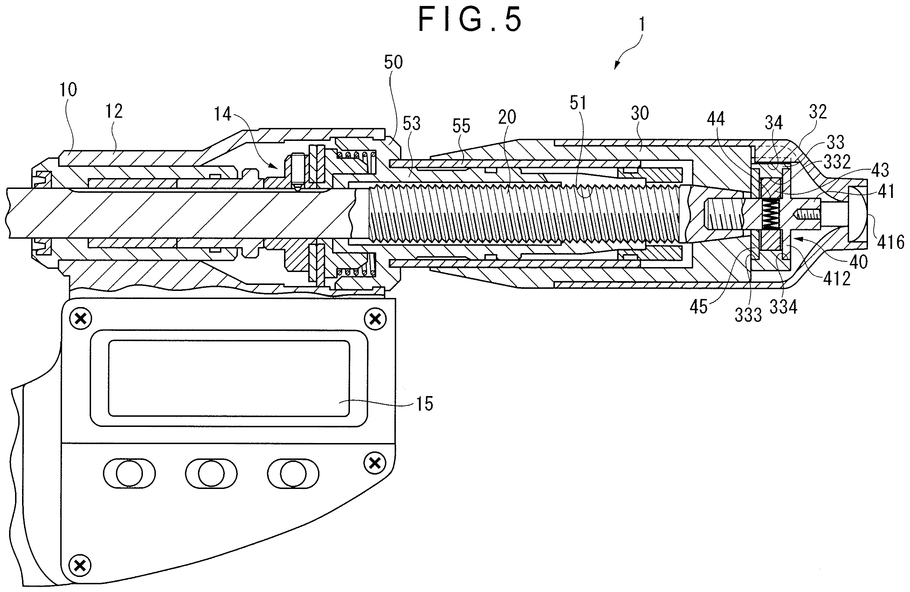

Fig. 5 is a cross-sectional view showing a primary part of a micrometer 1 of a second exemplary embodiment of the invention. Incidentally, the same reference numerals will be attached to components corresponding to the same functional portions as the first exemplary embodiment. The description of the reference numeral will be omitted or simplified.

The micrometer 1 of this exemplary embodiment is arranged substantially in the same manner as that of the first exemplary embodiment. However, whereas the thimble 30 is a fixed type in the first embodiment, the thimble 30 is a movable type in this exemplary embodiment (a first difference). Moreover, the cap 32 is integrated with the cylinder 31 (the thimble 30) in the first exemplary embodiment, whereas the cap 32 and the thimble 30 are separately provided in this exemplary embodiment (a second difference).

In this exemplary embodiment, as shown in Fig. 5, the thimble 30 is fitted on the guide cylinder 55 and is rotatable relative to the guide cylinder 55. A graduation (not shown) is provided at a first end of the thimble 30. In this exemplary embodiment, the displacement of the thimble 30 can also be measured by reading the graduation provided on the thimble 30 and a graduation on the guide cylinder 55, in addition to reading the display displayed on the display unit 15. An end of the spindle 20 is fitted into a second end of the thimble 30, whereby the thimble 30 is integrally rotated with the spindle 20. A cap 32 is fitted as an operation section into the second end of the thimble 30, the cap 32 being not integrally rotated with the thimble 30. The cap 32 is prevented from falling from the thimble 30 by a detachment-prevention screw 416 that is screwed to the base end of the support shaft 41 of the constant pressure mechanism 40.

A guide key 34 is provided on an inner circumference of the cap 32. A ratchet ring 33 that is engaged with the guide key 34 and the constant pressure mechanism 40 that is received in the ratchet ring 33 are provided in the cap 32.

Sawtooth first projections 332 are provided on an inner circumference of the ratchet ring 33 in the same manner as the first exemplary embodiment. In this exemplary embodiment, the ratchet ring 33 is provided with a first recess 333 having a diameter larger than the diameter of the inner circumference at a first end and a second recess 334 having a diameter larger than the diameter of the inner circumference at a second end. A plate member 45 that is abutted against the thimble 30 is received in the first recess 333.

The constant pressure mechanism 40 includes a support shaft 41, a pair of ratchet claws 43 and a coil spring 44 in the same manner as the first exemplary embodiment. A flange 412 (head) is provided on the support shaft 41. The flange 412 is received in the second recess 334 of the ratchet ring 33.

In this exemplary embodiment, in measuring an object, the thimble 30 is initially rotated and the spindle 20 is advanced toward the anvil to be abutted on the object. After the thimble 30 is rotated until the spindle 20 is abutted against the object, the cap 32 is rotated, thereby allowing the measurement under the constant measuring pressure.

The constant pressure mechanism 40 of a shortened length in the axial direction of the spindle 20 is also provided in this exemplary embodiment. Accordingly, the cap 32 receiving the constant pressure mechanism 40 therein can be shortened in length, thereby reducing the size of the micrometer 1. Additionally, since the thimble 30 is movable, the displacement of the spindle 20 can be measured by reading graduations provided on an outer circumference of the main body 10 and the thimble 30, thereby improving the operability.

### [Third Exemplary Embodiment]

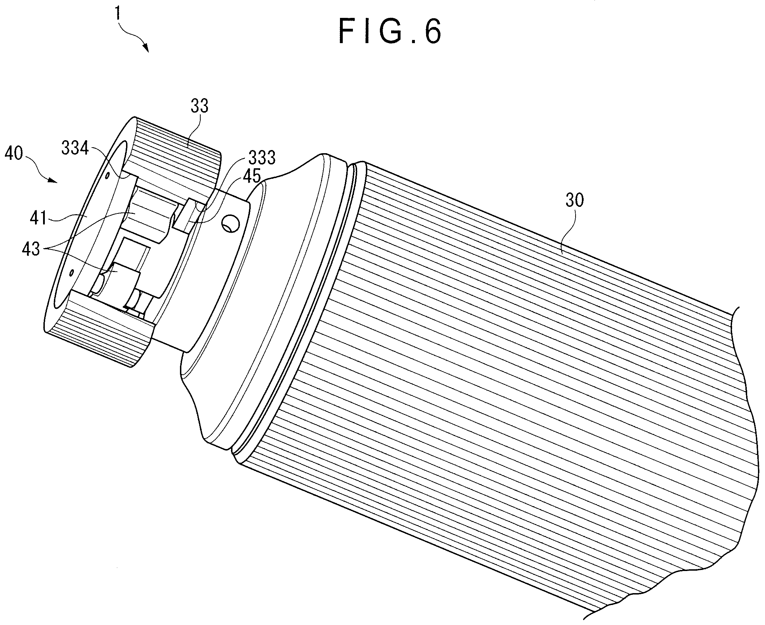

Fig. 6 is a perspective view showing a primary part of a micrometer 1 of a third exemplary embodiment of the invention.

The micrometer 1 of this exemplary embodiment is arranged substantailly in the same manner as that of the second exemplary embodiment. On the other hand, exemplary features of this exemplary embodiment are: that a cap 32 is not provided; that an outer circumference of a ratchet ring 33 is knurled to provide parallel grooves; and that the ratchet ring 33 works as a ratchet ring portion and an operation section. In other words, after the thimble 30 is rotated until the spindle 20 is abutted against the object, the ratchet ring 33 is rotated, thereby allowing the measurement under a constant measuring pressure.

The constant pressure mechanism 40 of a shortened length in the axial direction of the spindle 20 is also provided in this exemplary embodiment. Accordingly, the ratchet ring 33 receiving the constant pressure mechanism 40 therein can be shortened in length, thereby reducing the size of the micrometer 1. Furthermore, since a cap is unnecessary, the size of the micrometer 1 can be further reduced.

### [Modifications of Exemplary Embodiment(s)]

The scope of the invention, which is defined in the independent claim, is not limited to the above-described embodiments, but includes modifications and improvements that are compatible with an object of the invention.

In each of the above-described exemplary embodiments, a pair of the ratchet claws 43 are provided on the both sides of the support shaft 41. However, only a single ratchet claw 43 may be provided on one side of the support shaft 41.

In each of the above-described exemplary embodiments, the pair of the ratchet claws 43 are biased toward the ratchet ring 33 by a single coil spring 44 inserted through the spring hole 413 that penetrates the support shaft 41. However, a wall for dividing the spring hole 413 in half may be provided and the ratchet claws 43 may be respectively biased toward the ratchet ring 33 by dedicated coil springs supported by the wall.

In each of the above-described exemplary embodiments, the guide key 34 (engaging projection) is provided on the thimble 30 and the groove 331 to be engaged with the guide key 34 is provided on the ratchet ring 33. However, the guide groove may be provided on the thimble 30 along the axial direction of the spindle 20 and the engaging projection to be engaged with the guide groove may be provided on the ratchet ring 33.

In each of the above-described exemplary embodiments, the ratchet claws 43 are rotatably provided around the screw 433 that is inserted through the ratchet claws 43 and screwed to the head 412 of the support shaft 41. However, the ratchet claws 43 may be provided with a rotating shaft projecting toward the head 412, which is held by the head 412, so that the ratchet claws 43 may be rotatably provided. Alternatively, the ratchet claws 43 may be provided with a pin perpendicularly attached to the head 412 instead of the screw 433, so that the ratchet claws 43 may be rotatably provided around the pin.

In each of the above-described embodiments, the detector 14 is provided with an electro-capacitance type encoder. However, the detector 14 may be provided with an encoder of an optical type, electromagnetic type and the like as long as the encoder can detect the rotation of the spindle 20.

The application of the constant pressure mechanism 40 is not limited to each of the above-described exemplary embodiments. The constant pressure mechanism can also be applied to a micrometer of a fixed thimble and a movable thimble (a ratchet thimble type, ratchet stop type), where a cap and a thimble are modified from each of the above-described exemplary embodiments. For example, in the micrometer 1 with the movable thimble 30 of the second exemplary embodiment, a circumferential groove may be provided on the outer circumference of the base end of the thimble 30 and a circumferential projection may be provided inside with a part of the cap 32 covering the thimble 30, where the projection is fitted into the groove of the thimble 30 to prevent the detachment of the cap 32 from the thimble 30, and the constant pressure mechanism 40 may be provided in a space in the cap 32.

## Claims

1. A micrometer, comprising:
a main body (10) of a substantially U-shape that has an anvil (11) at a first end thereof and a female screw (51) at a second end thereof;
a spindle (20) that is screwed in the female screw (51) and is configured to be axially moved toward and away from the anvil (11) in accordance with a screwing rotation;
an operation section (30) that is configured to rotate the spindle (20) to move the spindle (20) toward and away from the anvil (11); and
a constant pressure mechanism (40) interposed between the operation section (30) and the spindle (20), the constant pressure mechanism (40) being configured to transmit a rotation of the operation section (30) to the spindle (20) and to freely rotate the operation section (30) relative to the spindle (20) when more than a predetermined load is applied on the spindle (20), wherein
the operation section (30) includes a ratchet ring (33) of a ring shape that is provided with a sawtooth first projection (332) on an inner circumference thereof;
the constant pressure mechanism (40) includes:
a support shaft (41) provided with a shaft portion (411) that is provided at a base end of the spindle (20) coaxially with a center axis of the spindle (20) and inserted into the ratchet ring (33) and a head (412) provided at a base end of the shaft portion (411) and having a diameter larger than the shaft portion (411); a further shaft (432) held by the head (412); a ratchet claw (43) that is provided in the ratchet ring (33) in a manner to be rotatable around said shaft held by the head (412) and is provided with a second projection (434) to be engaged with the first projection (332) on a lateral side thereof; and
a biasing unit (44) that is configured to bias the ratchet claw (43) toward the first projection (332).

2. The micrometer according to Claim 1, wherein
a pair of the ratchet claws (43) are provided on both side of the shaft portion (411).

3. The micrometer according to Claim 2, wherein
the shaft portion (411) is provided with a spring hole (413) that is orthogonal to a center axis of the shaft portion (411) and penetrates the shaft portion (411); and
the biasing unit (44) is a coil spring inserted into the spring hole (413) to bias the pair of the ratchet claws (43) toward the first projection (332).

## Patentansprüche

1. Mikrometerschraube, Folgendes umfassend:
einen im Wesentlichen U-förmig geformten Hauptkörper (10) mit einem Amboss (11) an einem ersten Ende davon und einem Innengewinde (51) an einem zweiten Ende davon;
eine Spindel (20), die in das Innengewinde (51) eingedreht wird und konfiguriert ist, im Einklang mit einer Schraubdrehung axial zu dem Amboss (11) hin und davon weg bewegt zu werden;
einen Betätigungsabschnitt (30), der konfiguriert ist, die Spindel (20) zu drehen, um die Spindel (20) zum Amboss (11) hin und von diesem weg zu bewegen; und
einen Konstantdruckmechanismus (40), angeordnet zwischen dem Betätigungsabschnitt (30) und der Spindel (20), wobei der Konstantdruckmechanismus (40) konfiguriert ist, eine Drehung des Betätigungsabschnitts (30) auf die Spindel (20) zu übertragen und den Betätigungsabschnitt (30) mit Bezug auf die Spindel (20) frei zu drehen, wenn mehr als eine vorgegebene Last auf die Spindel (20) aufgebracht wird, wobei
der Betätigungsabschnitt (30) einen Ratschenring (33) mit einer Ringform enthält, der mit einem ersten Sägezahnvorsprung (332) an einem inneren Umfang davon versehen ist;
der Konstantdruckmechanismus (40) Folgendes enthält:
einen Stützschaft (41), der mit Folgendem versehen ist: einem Schaftabschnitt (411), welcher an einem Basisende der Spindel (20) koaxial mit einer Mittelachse der Spindel (20) bereitgestellt und in den Ratschenring (33) eingeführt ist, und einem Kopf (412), der an einem Basisende des Schaftabschnitts (411) bereitgestellt ist und einen Durchmesser aufweist, der größer ist als der des Schaftabschnitts (411);
einen weiteren Schaft (432), gehalten von dem Kopf (412);
eine Ratschenklaue (43), die auf eine Weise in dem Ratschenring (33) bereitgestellt ist, dass sie um den von dem Kopf (412) gehaltenen Schaft drehbar ist und mit einem zweiten Vorsprung (434) versehen ist, um den ersten Vorsprung (332) auf einer lateralen Seite davon in Eingriff zu nehmen; und
eine Vorspanneinheit (44), die konfiguriert ist, die Ratschenklaue (43) zum ersten Vorsprung (332) hin vorzuspannen.

2. Mikrometerschraube nach Anspruch 1, wobei
ein Paar aus den Ratschenklauen (43) auf beiden Seiten des Schaftabschnitts (411) bereitgestellt ist.

3. Mikrometerschraube nach Anspruch 2, wobei
der Schaftabschnitt (411) mit einer Federöffnung (413) versehen ist, die senkrecht zu einer Mittelachse des Schaftabschnitts (411) angeordnet ist und den Schaftabschnitt (411) durchdringt; und
die Vorspanneinheit (44) eine Spiralfeder ist, die in die Federöffnung (413) eingeführt ist, um das Paar aus den Ratschenklauen (43) zum ersten Vorsprung (332) hin vorzuspannen.

## Revendications

1. Micromètre, comprenant :
un corps principal (10) ayant une forme sensiblement en U qui comporte une enclume (11) au niveau de sa première extrémité et une vis femelle (51) au niveau de sa seconde extrémité ;
une broche (20) qui est vissée dans la vis femelle (51) et est configurée pour être rapprochée et éloignée axialement de l'enclume (11) selon une rotation de vissage ;
une section d'exploitation (30) qui est configurée pour mettre en rotation la broche (20) afin de rapprocher et d'éloigner la broche (20) de l'enclume (11) ; et
un mécanisme de pression constante (40) interposé entre la section d'exploitation (30) et la broche (20), le mécanisme de pression constante (40) étant configuré pour transmettre une rotation de la section de fonctionnement (30) à la broche (20) et pour mettre en rotation librement la section d'exploitation (30) par rapport à la broche (20), lorsque plus d'une charge prédéterminée est appliquée sur la broche (20), dans lequel
la section d'exploitation (30) comporte un anneau à cliquet (33) en forme d'anneau qui est pourvu d'une première saillie en dents de scie (332) sur sa circonférence interne ;
le mécanisme de pression constante (40) comporte :
un arbre de support (41) pourvu d'une partie d'arbre (411) qui est prévu au niveau d'une extrémité de base de la broche (20) coaxialement avec un axe de centre de la broche (20) et inséré dans l'anneau à cliquet (33) et une tête (412) prévue au niveau d'une extrémité de base de la partie d'arbre (411) et ayant un diamètre plus grand que la partie d'arbre (411) ;
un autre arbre (432) maintenu par la tête (412) ;
une pince à cliquet (43) qui est prévue dans l'anneau à cliquet (33) de façon à pouvoir être mise en rotation autour dudit arbre maintenu par la tête (412) et est pourvue d'une seconde saillie (434) à mettre en prise avec la première saillie (332) sur un côté latéral de celle-ci ; et
une unité de sollicitation (44) qui est configurée pour solliciter la pince à cliquet (43) vers la première saillie (332).

2. Micromètre selon la revendication 1, dans lequel
une paire de pinces à cliquet (43) est prévue des deux côtés de la partie d'arbre (411).

3. Micromètre selon la revendication 2, dans lequel
la partie d'arbre (411) est pourvue d'un trou de ressort (413) qui est orthogonal à un axe de centre de la partie d'arbre (411) et pénètre dans la partie d'arbre (411) ; et
l'unité de sollicitation (44) est un ressort hélicoïdal inséré dans le trou de ressort (413) pour solliciter la paire de pinces à cliquet (43) vers la première saillie (332).
